# FASCICULE DE BREVET EUROPEEN

(11) **EP 3 251 564 B1**
(45) Date de publication et mention de la délivrance du brevet: **01.04.2020**
(21) Numéro de dépôt: 17171613.7
(22) Date de dépôt: 17.05.2017
(51) Int. Cl.: A47J 31/46

(54) **MACHINE A CAFE AVEC BUSE TERMINALE OPTIMISÉE**
KAFFEEMASCHINE MIT OPTIMIERTER ENDDÜSE
COFFEE MACHINE WITH OPTIMISED END NOZZLE

(30) Priorité: 31.05.2016 FR 1654923
(43) Date de publication de la demande: 06.12.2017
(73) Titulaire: SEB S.A., 69130 Ecully (FR)
(72) Inventeur: LEBOUVIER, Christophe, 53950 Louverne (FR); AVOIE, Fabrice, 49070 Beaucouze (FR); DELIENS, Patrick, 53100 Mayenne (FR)
(74) Mandataire: Bourrières, Patrice

(56) Documents cités:
- EP-A1- 1 092 377
- EP-A1- 1 759 618
- EP-A1- 2 186 454
- WO-A1-2004/060121
- WO-A1-2008/013452

## Description

L'invention concerne une machine à café de type machine à expresso qui permet la préparation d'un café express, ledit café étant déversé dans un récipient par l'intermédiaire d'une buse terminale. L'invention porte tout particulièrement sur une conception optimisée de la buse terminale.

### Etat de la technique

La demanderesse a déjà développé une telle machine à café, ayant fait l'objet d'une demande de brevet européen publiée sous le numéro EP1759618A1, une telle machine permettant de pallier de nombreux inconvénients tels que décrits dans ladite demande, notamment les phénomènes de turbulence et d'accélération latérale générant des débordement latéraux de la boisson durant son écoulement, les phénomènes d'encrassement et d'entartrage nécessitant des nettoyages plus réguliers de la machine, et les phénomènes de ralentissement de l'écoulement de la boisson de café ou d'accumulation de la boisson de café dans le bec verseur en raison de la présence de mousse ou de crème de café fine et persistante dans ledit bec verseur lors de la préparation de la boisson.
Cette machine à café comporte un réservoir d'eau froide, une chambre d'infusion ou de percolation apte à recevoir de la mouture de café, un système de production d'eau chaude configuré pour puiser l'eau du réservoir, chauffer cette eau et injecter l'eau chaude dans la chambre d'infusion, et un bec verseur. Le bec verseur comporte au moins une buse terminale dont une partie supérieure est raccordée à un conduit d'écoulement lui-même raccordé à la chambre d'infusion, une partie inférieure qui déverse la boisson de café hors de la machine à café et une partie centrale qui relie les parties supérieure et inférieure.

Ces parties supérieure, centrale et inférieure sont raccordées entre elles par deux coudes de sorte à former une chicane. Les parties supérieure et inférieure sont sensiblement parallèles entre elles et orientées verticalement sur la machine à café, la boisson de café pénétrant dans la partie supérieure avec un écoulement tangentiel, c'est-à-dire plus ou moins parallèle à celle-ci. La buse comprend sur une face arrière une rainure ou fente en forme de U, qui s'étend tout le long des parties supérieure et centrale, et jusqu'à l'extrémité de la partie inférieure, cette extrémité inférieure comprenant une collerette qui délimite ladite rainure. Cette mise en œuvre permet de constituer une paroi terminale présentant une surface gauche qui forme une section de passage de l'infusion à contour ouvert, l'ouverture étant orientée vers l'arrière de la buse terminale. Le phénomène de tension de surface et la configuration de la buse terminale assurent un écoulement de la boisson de café rapide le long de la paroi interne de cette buse terminale en suivant l'orientation donnée par cette dernière, sans s'y attacher. Par ailleurs, du fait que la section de passage sur la buse terminale ne présente plus de contour fermé, les bulles de mousse de café ne s'agglomèrent plus à l'entrée du bec verseur, mais elles se laissent emporter par le jet de boisson dans son cheminement vers le bas.

Malgré les nombreux avantages que procure cette machine à café selon le document EP1759618A1, cette conception de buse terminale génère d'autres inconvénients. Tout d'abord, lors du démarrage de l'écoulement de la boisson, il se produit une surpression dans le conduit d'écoulement en amont de la partie supérieure de la buse terminale. Cette surpression ne permet pas à la boisson de café de s'écouler en suivant la paroi interne. Il se produit en conséquence une projection verticale de la boisson de café qui s'échappe par la rainure sur la face arrière, au niveau du coude de raccordement entre les parties supérieure et centrale. En outre, durant tout l'écoulement du café, le jet de boisson de café à l'extrémité de la partie inférieure de la buse terminale sort en saccades et de manière décentrée par rapport à la direction plus ou moins verticale de cette partie inférieure. Par ailleurs, durant cet écoulement de la boisson de café, le flux de boisson tend à passer au-dessus de la collerette et à se répandre autour de la face externe de la buse terminale qui est généralement conçue pour être enjolivée.

On connait également le document WO2004060121 divulguant une machine à café comportant une buse terminale.

### Résumé de l'invention

La présente invention a pour but de conserver tous les avantages de la buse terminale mise en œuvre sur la machine à café décrite dans la demande de brevet EP1759618A1, et de pallier les inconvénients précités de celle-ci.

A cet effet, l'invention concerne une machine à café comportant un réservoir d'eau froide, une chambre d'infusion apte à recevoir de la mouture de café, un système de production d'eau chaude configuré pour puiser l'eau du réservoir, chauffer cette eau et injecter l'eau chaude dans la chambre d'infusion, et un bec verseur comportant au moins une buse terminale dont une partie supérieure est raccordée à la chambre d'infusion, une partie inférieure déverse la boisson de café hors de la machine à café et une partie centrale relie les parties supérieure et inférieure, lesdites parties supérieure, centrale et inférieure étant raccordées entre elles par deux coudes de sorte à former une chicane, caractérisée en ce que la buse terminale comprend une face arrière munie d'une rainure formant un conduit d'écoulement pour la boisson de café, ladite rainure débouchant sur une extrémité de la partie inférieure et s'étendant jusque au moins la partie centrale, ladite buse terminale comprenant un organe de guidage de la boisson de café qui s'étend à l'intérieur d'au moins la partie inférieure, dans la rainure. Ces caractéristiques permettent de supprimer les turbulences et d'assurer un guidage de la boisson de café en sortie de la buse terminale, ladite boisson s'écoulant linéairement et sensiblement verticalement à l'extrémité de la partie inférieure, sans aucun débordement sur le contour de la face externe de cette buse terminale.

Selon l'invention, l'organe de guidage comprend une nervure qui s'étend longitudinalement à l'intérieur d'au moins la partie inférieure.

Selon l'invention, la nervure s'étend longitudinalement dans un fond de la rainure, de manière symétrique, à l'intérieur d'au moins la partie inférieure.

Dans une réalisation préférentielle de la machine à café, la buse terminale comprend un volet qui est agencé du côté de la face arrière de cette buse, au niveau du coude supérieur raccordant la partie centrale et la partie supérieure, ce volet délimitant la rainure. La présence de ce volet permet de pallier les phénomènes de projections verticales au niveau du coude supérieur du fait de la surpression générée au démarrage de l'écoulement de la boisson de café. On pourrait toutefois conserver une version de buse terminale sur laquelle la rainure s'étendrait sur toute la longueur de sa face arrière, y compris sur son coude supérieur et sur sa partie supérieure, tout en conservant les effets bénéfiques procurés par la rainure débouchant sur l'extrémité de la partie inférieure et par la nervure de guidage agencée dans cette partie inférieure. Dans une réalisation préférentielle de la machine à café, une extrémité de la partie supérieure de la buse terminale, raccordée au conduit d'écoulement, comprend un talon interne agencé sur un côté interne de la face avant de ladite buse terminale. Ce talon interne est réduit au maximum pour limiter le renvoi vers l'arrière ou le refoulement du flux de la boisson de café, au démarrage de l'écoulement. Cette réduction du talon permet d'optimiser le phénomène de tension de surface dès le démarrage de l'écoulement pour plaquer le plus rapidement possible le flux de boisson contre la paroi interne dans la buse terminale.

Dans une réalisation de la machine à café, celle-ci comprend une pièce d'habillage agencée sur le côté externe de la face avant de la buse terminale. Cette pièce d'habillage permet d'enjoliver la buse terminale notamment en procurant un effet chromé.

Dans une réalisation de la machine à café le bec verseur comporte deux buses terminales. On pourrait toutefois prévoir une variante de bec verseur avec une seule buse terminale, voire avec plus de deux buses terminales, sans sortir du cadre de l'invention. Dans ce cas, le bec verseur comprend autant de conduits d'écoulement raccordés respectivement aux extrémités des parties supérieures desdites buses terminales, ces conduits d'écoulement étant raccordés à la chambre d'infusion ou de percolation par le biais d'un collecteur d'alimentation.

### Brève description des figures

Les caractéristiques et avantages de l'invention apparaîtront à la lecture de la description suivante d'un mode de réalisation préférentiel et non limitatif d'une machine à café équipée d'un bec verseur à deux buses terminales. Cette description s'appuie sur des figures parmi lesquelles :
- La figure 1 illustre une vue d'ensemble d'une machine à café selon l'invention ;
- La figure 2 illustre une vue d'ensemble du bec verseur sur la machine à café de la figure 1 ;
- La figure 3 illustre une vue en coupe d'une buse terminale sur le bec verseur ;
- Les figures 4 et 5 illustrent deux vues de côté de la buse, mettant en évidence la présence d'une pièce d'habillage sur la face externe avant de celle-ci.

### Description détaillée

Dans la suite de la description, le terme « machine » est utilisé pour définir la machine à café selon l'invention.

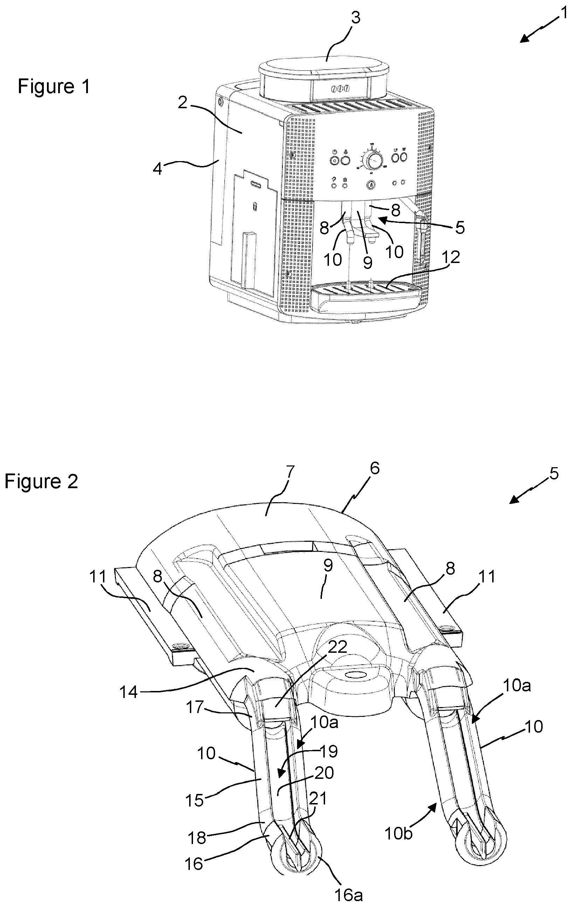

Tel qu'illustré sur la figure 1, la machine 1 permet la préparation de café expresso, celle-ci comprenant un boîtier 2 de forme générale parallélépipédique qui renferme les principaux éléments fonctionnels que l'on trouve traditionnellement sur ce type de machine à café. La machine 1 comprend notamment un réservoir de café 3 et un réservoir d'eau 4 agencés sur le boîtier 2. A l'intérieur du boîtier 1 est disposé un groupe d'infusion comportant une chambre d'infusion en forme de cuve cylindrique apte à recevoir une certaine quantité de café moulu au-dessus d'une paroi inférieure formant un filtre pour la mouture. La chambre d'infusion est montée fixe au-dessus d'un bloc thermique, d'axe vertical, dont elle constitue le prolongement. Le bloc thermique renferme un circuit d'eau et un élément chauffant électrique et assure l'alimentation en eau chaude de la chambre d'infusion. La chambre d'infusion reçoit par ailleurs un piston presseur qui coulisse verticalement et de manière étanche dans ladite chambre pour compacter la mouture. La machine 1 comprend également un bec verseur 5. L'eau chaude en provenance du bloc thermique est envoyée à travers la mouture dans la chambre d'infusion et la boisson infusée est ensuite évacuée au travers du piston presseur, via un canal interne de ce dernier prolongé par un conduit intermédiaire qui est raccordé au bec verseur 5. Les éléments constitutifs du groupe d'infusion ne sont pas représentés sur les dessins, mais peuvent être réalisés selon la description du document WO 99/12456. D'autres variantes restent envisageables sans sortir du cadre de l'invention.

Tel qu'illustré en figures 1 et 2, le bec verseur 5 comporte un corps 6 creux, de forme allongée présentant, en partie supérieure, une tubulure verticale 7 réalisée plus particulièrement sous forme de deux cylindres 8 raccordés entre eux par une paroi périphérique 9 recourbée. La tubulure verticale 7 se prolonge vers le bas par deux buses terminales 10 qui sont agencées parallèlement l'une à l'autre. Le bec verseur 5 comporte par ailleurs, de part et d'autre de la tubulure vertical 7, deux ailettes 11 de montage sur le boîtier 2 qui permettent le guidage du bec verseur 5 par rapport au boîtier 2 pour le coulisser verticalement et ajuster la distance entre les buses terminales 10 et un support 12 de la tasse.

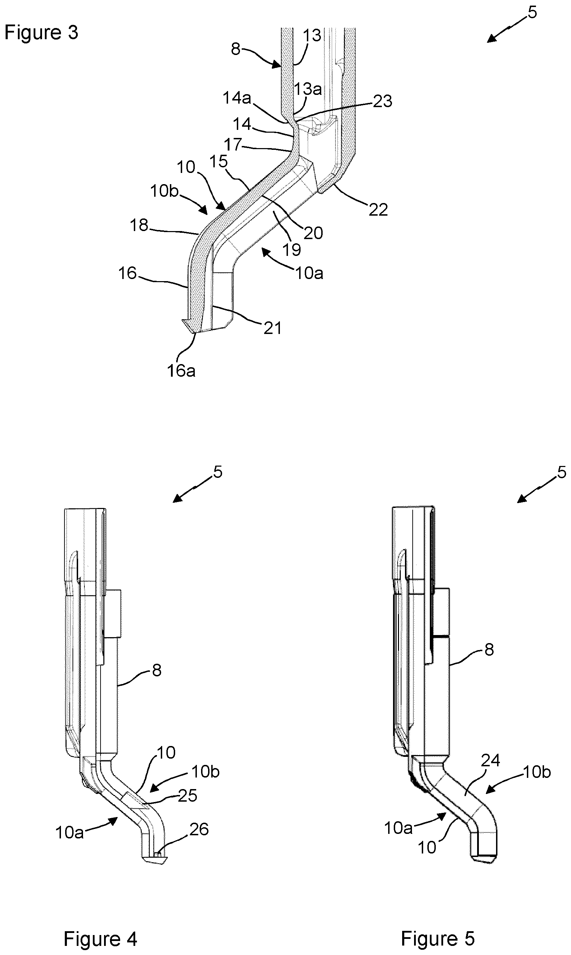

Tel qu'illustré en figure 3, chacune des deux buses terminales 10 est raccordée à un conduit d'écoulement 13 s'étendant verticalement à l'intérieur d'un cylindre 8 de la tubulure verticale 7. Les buses terminales 10 comprennent chacune une partie supérieure 14, une partie centrale 15, une partie inférieure 16 et deux coudes 17, 18. La partie supérieure 14 s'étend verticalement et est raccordée à l'extrémité 13a du conduit d'écoulement 13. La partie inférieure 16 s'étend verticalement et est décalée vers l'avant par rapport à la partie supérieure 13. La partie centrale 15 est agencée en oblique, par exemple avec un angle d'inclinaison à 45 degrés par rapport aux parties supérieure 14 et inférieure 16. Le coude 17 supérieur raccorde la partie supérieure 14 à la partie centrale 15 et, de même, le coude 18 inférieur raccorde la partie centrale 15 à la partie inférieure 16. Ces coudes 17, 18 assurent un raccordement en arc de cercle avec lesdites parties, le rayon de raccordement étant de préférence supérieur à 9 mm.

Tel qu'illustré en regard des figures 2 et 3, notamment, chaque buse terminale 10 a une forme cylindrique mais est ouverte sur sa face arrière 10a par une fente ou rainure 19 qui s'étend sur toute la longueur de la partie centrale 15, du coude 18 inférieur et de la partie inférieure 16, ladite rainure 19 débouchant à l'extrémité 16a de la partie inférieure 16. La paroi interne 20 de la buse terminale 10 présente une surface circulaire lisse et un profil doux, ce qui permet un meilleur écoulement de la boisson qui suit alors de très près le profil incurvé de cette paroi interne 20. Une nervure 21 est agencée sur la paroi interne 20, dans le fond de la rainure 19, cette nervure 21 s'étendant verticalement sur la longueur de la partie inférieure 16, depuis son extrémité 16a jusqu'au coude 18 inférieur . Cette nervure 21 assure le guidage de la boisson jusqu'à la sortie de la buse terminale 10. Cette mise en œuvre permet d'obtenir un écoulement linéaire vertical en sortie de la buse terminale 10.

Tel qu'illustré en figures 2 et 3, un volet 22 est agencé du côté de la face arrière 10a de la buse terminale 10, au niveau du coude 17 supérieur raccordant la partie centrale 15 et la partie supérieure 14. Le volet 22 est agencé au niveau du coude 17 supérieur du côté de la face arrière 10a de la buse terminale 10. Ce volet 22 permet d'empêcher les projections verticales de boisson à l'extérieur de la buse terminale 10, du fait de la surpression générée en tout début d'écoulement de cette boisson. Pour favoriser également l'écoulement de la boisson le long de la paroi interne 20 dans la rainure 19, l'extrémité 14a de la partie supérieure 14 de la buse terminale 10 comprend un talon 23 agencé du côté de la face avant 10b de ladite buse terminale 10, ce talon 23 assurant la jonction entre la paroi interne 20 de la buse terminale 10 et l'extrémité 13a du conduit d'écoulement 13. Afin de favoriser l'écoulement de la boisson le long de la paroi interne 20 dans la buse terminale 10, ce talon 23 est minimisé.

En fonctionnement, la boisson de café arrive par le conduit découlement 13 puis s'écoule en suivant la paroi interne 20 de la buse terminale 10, par effet Coanda. Pour que l'écoulement puisse bien adhérer à la paroi interne 20, le choix du matériau et l'état de la surface de cette paroi interne 20 sont des facteurs très importants. Ainsi, une buse terminale 10 réalisée en une matière plastique, par exemple de l'ABS, permet d'obtenir un résultat satisfaisant. On pourrait également réaliser la buse terminale 10 en un acier inoxydable ayant un polissage type miroir.

De préférence, afin d'optimiser la tension superficielle de la boisson s'écoulant contre la paroi interne 20, la buse terminale 10 présente un diamètre interne de 4 mm et la rainure 19 présente une largeur de 4 mm.

Dans une mise en œuvre, le bec verseur 5 est réalisé en une seule pièce en une matière plastique, par exemple de l'ABS. On peut également prévoir un chromage de la face avant 10b de la buse terminale 10. Dans une variante illustrée en regard des figures 4 et 5, la buse terminale 10 est configurée pour recevoir une pièce d'habillage 24, par exemple en matière ABS chromée, qui est rapporté sur sa face avant 10b, par exemple par encliquetage grâce à des pattes d'encliquetage 25, 26 mises en œuvre sur cette face avant 10b, lesdites pattes d'encliquetage recevant des encoches complémentaires (non illustrées) agencées sur la face interne de la pièce d'habillage 24. Cette pièce d'habillage 24 permet d'enjoliver la buse terminale 10.

D'autres variantes et modes de réalisation peuvent être envisagés sans sortir du cadre de l'invention. A titre d'exemple, les buses terminales 10 du bec verseur 5 peuvent être inclinées latéralement au lieu d'être inclinées vers l'avant ou avoir une inclinaison latérale en plus de leur inclinaison vers l'avant.

## Revendications

1. Machine à café (1) comportant un réservoir d'eau (4) froide, une chambre d'infusion apte à recevoir de la mouture de café, un système de production d'eau chaude configuré pour puiser l'eau du réservoir, chauffer cette eau et injecter l'eau chaude dans la chambre d'infusion, et un bec verseur (5) comportant au moins une buse terminale (10) dont une partie supérieure (14) est raccordée à la chambre d'infusion, une partie inférieure (16) déverse la boisson de café hors de la machine à café et une partie centrale (15) relie les parties supérieure et inférieure, lesdites parties supérieure, centrale et inférieure étant raccordées entre elles par deux coudes (17, 18) de sorte à former une chicane, la buse terminale (10) comprenant une face arrière (10a) munie d'une rainure (19) formant un conduit d'écoulement pour la boisson de café, ladite rainure (19) débouchant sur une extrémité (16a) de la partie inférieure (16) et s'étendant jusque au moins la partie centrale (15), ladite buse terminale (10) comprenant un organe de guidage (21) de la boisson de café qui s'étend à l'intérieur d'au moins la partie inférieure (16), dans la rainure (19), **caractérisé en ce que** l'organe de guidage comprend une nervure (21) qui s'étend longitudinalement dans un fond de la rainure (19) de manière symétrique, à l'intérieur d'au moins la partie inférieure (16)

2. Machine à café (1) selon la revendication 1, **caractérisée en ce qu'**elle comprend un volet (22) agencé du côté de la face arrière (10a) de la buse terminale (10), au niveau du coude (17) raccordant la partie centrale (15) et la partie supérieure (14).

3. Machine à café (1) selon l'une des revendications 1 à 2, **caractérisée en ce que** une extrémité (14a) de la partie supérieure (14) de la buse terminale (10) comprend un talon (23) agencé sur un côté interne de la face avant 10b de ladite buse terminale (10).

4. Machine à café (1) selon l'une des revendications 1 à 3, **caractérisée en ce qu'**elle comprend une pièce d'habillage (24) agencée sur un côté externe de la face avant (10b) de la buse terminale (10).

5. Machine à café (1) selon l'une des revendications 1 à 4, **caractérisée en ce que** le bec verseur (5) comporte deux buses terminales (10).

## Patentansprüche

1. Kaffeemaschine (1), umfassend einen Kaltwasserbehälter (4), eine Brühkammer zur Aufnahme von gemahlenem Kaffee, ein System zur Erzeugung von heißem Wasser, das so ausgebildet ist, dass es Wasser aus dem Behälter entnimmt, dieses Wasser erhitzt und das heiße Wasser in die Brühkammer einleitet, und einen Ausgießer (5), der mindestens eine Enddüse (10) umfasst, deren oberer Abschnitt (14) mit der Brühkammer verbunden ist, aus deren unterem Abschnitt (16) das Kaffeegetränk aus der Kaffeemaschine fließt und deren mittlerer Abschnitt (15) den oberen und den unteren Abschnitt verbindet, wobei der obere, der mittlere und der untere Abschnitt mittels zweier Bögen (17, 18) so miteinander verbunden sind, dass eine Schikane gebildet wird, die Enddüse (10) eine Rückseite (10a) umfasst, die mit einer Aussparung (19) versehen ist, die einen Ablauf für das Kaffeegetränk bildet, wobei die Aussparung (19) in ein Ende (16a) des unteren Abschnitts (16) mündet und sich zumindest bis zum mittleren Abschnitt (15) erstreckt, wobei die Enddüse (10) ein Element (21) zum Führen des Kaffeegetränks umfasst, das sich vom Inneren zumindest des unteren Abschnitts (16) in der Aussparung (19) erstreckt, **dadurch gekennzeichnet, dass** das Führungselement eine Rippe (21) umfasst, die sich in der Längsrichtung in einem Boden der Aussparung (19) innerhalb zumindest des unteren Abschnitts (16) symmetrisch erstreckt.

2. Kaffeemaschine (1) nach Anspruch 1, **dadurch gekennzeichnet, dass** sie eine Klappe (22) umfasst, die auf der Seite der Rückseite (10a) der Enddüse (10) im Bereich des Bogens (17) angeordnet ist, der den mittleren Abschnitt (15) mit dem oberen Abschnitt (14) verbindet.

3. Kaffeemaschine (1) nach einem der Ansprüche 1 bis 2, **dadurch gekennzeichnet, dass** ein Ende (14a) des oberen Abschnitts (14) der Enddüse (10) einen Ansatz (23) umfasst, der auf einer Innenseite der Vorderseite (10b) der Enddüse (10) angeordnet ist.

4. Kaffeemaschine (1) nach einem der Ansprüche 1 bis 3, **dadurch gekennzeichnet, dass** sie ein Verkleidungsteil (24) umfasst, das auf einer Außenseite der Vorderseite (10b) der Enddüse (10) angeordnet ist.

5. Kaffeemaschine (1) nach einem der Ansprüche 1 bis 4, **dadurch gekennzeichnet, dass** der Ausgießer (5) zwei Enddüsen (10) umfasst.

## Claims

1. Coffee machine (1) comprising a cold water tank (4), an infusion chamber capable of receiving the coffee grounds, a system for producing hot water configured to draw the water from the tank, heat this water to inject the hot water into the infusion chamber, and a pouring spout (5) comprising at least one terminal nozzle (10) of which an upper portion (14) is connected to the infusion chamber, a lower portion (16) pours the coffee drink outside of the coffee machine and a central portion (15) connects the upper and lower portions, said upper, central and lower portions being connected together by two bends (17, 18) so as to form a chicane, the terminal nozzle (10) comprising a rear face (10a) equipped with a groove (19) forming a flow duct for the coffee drink, said groove (19) opening onto an end (16a) of the lower portion (16) and extending until at least the central portion (15), said terminal nozzle (10) comprising a member for guiding (21) the coffee drink which extends inside at least the lower portion (16), in the groove (19), **characterised in that** the guiding member comprises a ridge (21) which extends longitudinally into a bottom of the groove (19) symmetrically, inside at least the lower portion (16).

2. Coffee machine (1) according to claim 1, **characterised in that** it comprises a shutter (22) arranged on the side of the rearface (10a) of the terminal nozzle (10), at the level of the bend (17) connecting the central portion (15) and the upper portion (14).

3. Coffee machine (1) according to one of claims 1 to 2, **characterised in that** an end (14a) of the upper portion (14) of the terminal nozzle (10) comprises a stub (23) arranged on an inner side of the front face (10b) of said terminal nozzle (10).

4. Coffee machine (1) according to one of claims 1 to 3, **characterised in that** it comprises a covering part (24) arranged on an outer side of the front face (10b) of the terminal nozzle (10).

5. Coffee machine (1) according to one of claims 1 to 4, **characterised in that** the pouring spout (5) comprises two terminal nozzles (10).
